# EUROPEAN PATENT APPLICATION

(11) **EP 3 270 356 A1**
(43) Date of publication of application: **17.01.2018**
(21) Application number: 16305890.2
(22) Date of filing: 12.07.2016
(51) Int. Cl.: G06T 13/80

(54) **METHOD AND APPARATUS FOR DISPLAYING AN IMAGE TRANSITION**

(71) Applicant: ALCATEL LUCENT, 92100 Boulogne-Billancourt (FR)
(72) Inventor: AERTS, Maarten, 2018 Antwerpen (BE); TYTGAT, Donny, 2018 Antwerpen (BE)
(74) Representative: D'Halleweyn, Nele Veerle Trees Gertrudis

(57) **Abstract**

A method for displaying a transition, from a first photographic image viewed from a first camera position, to a second photographic image viewed from a second camera position different from the first camera position; the method comprising: displaying the first photographic image; displaying at least one virtual image of a transformation operation from a first virtual image corresponding to the first photographic image, to a second virtual image corresponding to the second photographic image; and displaying the second photographic image.

## Description

### Field of Invention

The field of the invention relates to displaying an image transition. Particular embodiments relate to a method, a computer program product and an apparatus for displaying a transition from a first photographic image viewed from a first camera position to a second photographic image viewed from a second camera position different from the first camera position.

### Background

Many applications are trying to make a user feel immersed in a particular environment. Notable examples are (online or offline) applications that allow users to view a geographic region at street-level, or that offer panoramic 360° views - for example at hotel sites, museums, or large public or corporate buildings. Because it is difficult to capture and/or model the whole environment in 3D, such applications restrict the motion freedom of the user. Such restrictions allow for more relaxed assumptions on the capturing of the environment. For instance, panoramic 360° views may be provided only at discrete locations in the environment. For viewing a geographic region at street-level, this may for example be every five or ten meters in the street; for hotels, this may for example be in only a number of key locations - for example at the lobby, the pool, a typical room,... Typically a user may navigate from one point to the other, often using a user interface within the current panoramic 360° view.

### Summary

What happens in transitions between two such discrete views is ambiguous, because there is no model available for rendering the content on the path between two such captured panoramic 360° views. When displaying such transitions, distortion artefacts may occur.

A first insight of the inventors is that the user should understand what is going on. Whatever is displayed during the transition, should intuitively mean to the user: "You moved from here to there (and you rotated like this)". If not, the user would be confused about his whereabouts in the virtual world. These kind of rules are well known to movie directors - a movie director shouldn't cut from one shot viewed from one camera position to another shot that is showing the same scene but from another camera position with a 180° rotated viewing angle.

A second insight of the inventors is that it may annoy users when something is rendered "best effort", yet is still far from realistic. This is called the "uncanny valley". If something cannot be rendered realistically, it should not be closely approximated unrealistically. It may be better to find a different solution.

Embodiments of the invention aim to provide a way of displaying a transition (also called a morphing operation) between two discrete views, in the absence of a complete 3D model or of detailed assumptions concerning the geometry of the scene. In this specification, such discrete views may be referred to as "photographic images", regardless of whether they are panoramic 360° views, or are single 2D images.

In other words, embodiments of the invention aim to allow more general, less constrained assumptions concerning the photographic images. Also, embodiments of the invention may aim to limit computational requirements.

According to a first aspect of the invention there is provided a method for displaying a transition, from a first photographic image viewed from a first camera position, to a second photographic image viewed from a second camera position different from the first camera position. The method comprises: displaying the first photographic image; displaying at least one virtual image of a transformation operation from a first virtual image corresponding to the first photographic image, to a second virtual image corresponding to the second photographic image; and displaying the second photographic image.

In this way, the method allows to transition from the first photographic image to the second photographic image without requiring a complete 3D model of the geometry of the scene, because at least one virtual image is displayed of a transformation operation between the first and second photographic images. Moreover, in this way, the method allows to limit computational requirements in the sense that the transition between the first and second photographic images can take place online (in real-time or close thereto) instead of only offline.

According to a preferred embodiment, the displaying of the at least one virtual image of the transformation operation comprises displaying at least three virtual images, wherein the at least three virtual images comprise at least the first virtual image, the second virtual image, and one or more virtual images of the transformation operation which are intermediate between the first virtual image and the second virtual image.

In this way, a gradual transition from the first to the second photographic image is made possible, via the corresponding first and second virtual image respectively. In this way, the user can more clearly keep track spatially of the transition.

According to another preferred embodiment, the method comprises extracting a first number of image features from the first photographic image; extracting a second number of image features from the second photographic image; and matching the extracted first number of image features and the extracted second number of image features in order to determine shared image features that are shared by the first photographic image and the second photographic image. According to a specific embodiment, the transformation operation may be performed based on the determined shared image features.

In this way, the user can readily relate the transformation operation to the first and second photographic images.

According to a further developed embodiment, the method comprises reducing the number of visual features of the first photographic image in order to transform the first photographic image into the first virtual image; and reducing the number of visual features of the second photographic image in order to transform the second photographic image into the second virtual image.

In this way, the first and second virtual image may represent images that are computationally efficient to be calculated, yet that resemble their corresponding photographic images sufficiently for the user.

According to another preferred embodiment, the displaying of the at least one virtual image of the transformation operation comprises excluding visualization of at least one virtual object, if the second camera position is comprised within a predetermined cone from the first camera position, wherein the predetermined cone is defined based on the at least one virtual object. In a specific exemplary embodiment, the predetermined cone is centred on the at least one virtual object. In a further developed specific exemplary embodiment, the predetermined cone opens at an angle of the order of 60°.

In this way, any disorienting effect of the transition can be reduced, in particular in the sense that, if a virtual object is passed closely by the spatial path of the transition, visualizing that virtual object could disorient the user.

According to a further developed embodiment, the at least one virtual image comprises at least one of the following image types: an image showing one or more virtual reference planes; an image showing one or more reference objects; an image showing a point cloud; and an image showing object line segments.

In this way, one or more computationally efficient representations can be chosen for the at least one virtual image.

According to another preferred embodiment, the method comprises displaying at least one first transformation image of a transformation operation from the first photographic image to the first virtual image; and displaying at least one second transformation image of a transformation operation from the second virtual image to the second photographic image.

In this way, the change from the photographic representation to the virtual representation and back again can be displayed in a gradual manner, in order to reduce confusion for the user.

According to yet another aspect of the invention, there is provided a computer program product, comprising computer-executable instructions configured for, when executed, controlling the steps of any one of the methods described hereinabove. In other words, the instructions may be configured for performing at least the image processing related operations, for example when a display controller or the like is configured to display images processed in that manner.

It will be understood that the above-described features and advantages of the method embodiments also apply, *mutatis mutandis,* for the computer program product embodiments.

According to yet another aspect of the invention, there is provided an apparatus for displaying a transition, from a first photographic image viewed from a first camera position, to a second photographic image viewed from a second camera position different from the first camera position. The apparatus comprises a display controller configured for: displaying the first photographic image; displaying at least one virtual image of a transformation operation from a first virtual image corresponding to the first photographic image, to a second virtual image corresponding to the second photographic image; and displaying the second photographic image.

It will be understood that the above-described features and advantages of the method embodiments also apply, *mutatis mutandis,* for the apparatus embodiments. Nevertheless, for the sake of completeness, a non-limiting number of preferred embodiments will be listed below explicitly, for which analogous considerations and/or advantages may apply as for the corresponding method embodiments above.

According to a preferred embodiment, the display controller is further configured for the displaying of the at least one virtual image of the transformation operation: displaying at least three virtual images, wherein the at least three virtual images comprise at least the first virtual image, the second virtual image, and one or more virtual images of the transformation operation which are intermediate between the first virtual image and the second virtual image.

According to another preferred embodiment, the apparatus comprises a feature matching module configured for: extracting a first number of image features from the first photographic image; extracting a second number of image features from the second photographic image; and matching the extracted first number of image features and the extracted second number of image features in order to determine shared image features that are shared by the first photographic image and the second photographic image. According to a specific embodiment, the display controller may be configured for performing the transformation operation based on the determined shared image features.

According to a further developed embodiment, the display controller is configured for reducing the number of visual features of the first photographic image in order to transform the first photographic image into the first virtual image; and configured for reducing the number of visual features of the second photographic image in order to transform the second photographic image into the second virtual image.

According to a preferred embodiment, the display controller is configured for the displaying of the at least one virtual image of the transformation operation by excluding visualization of at least one virtual object, if the second camera position is comprised within a predetermined cone from the first camera position, wherein the predetermined cone is defined based on the at least one virtual object. In a specific exemplary embodiment, the predetermined cone is centred on the at least one virtual object. In a further developed specific exemplary embodiment, the predetermined cone opens at an angle of the order of 60°.

According to another preferred embodiment, the at least one virtual image comprises at least one of the following image types: an image showing one or more virtual reference planes; an image showing one or more reference objects; an image showing a point cloud; and an image showing object line segments.

According to a further developed embodiment, the display controller is further configured for: displaying at least one first transformation image of a transformation operation from the first photographic image to the first virtual image; and displaying at least one second transformation image of a transformation operation from the second virtual image to the second photographic image.

### Brief description of the figures

The accompanying drawings are used to illustrate presently preferred non-limiting exemplary embodiments of devices of the present invention. The above and other advantages of the features and objects of the invention will become more apparent and the invention will be better understood from the following detailed description when read in conjunction with the accompanying drawings, in which:
Figure 1 illustrates schematically operation of a method embodiment according to the present invention;
Figure 2 illustrates schematically operation of another method embodiment according to the present invention;
Figure 3 illustrates schematically operation of another method embodiment according to the present invention;
Figure 4 illustrates schematically operation of another method embodiment according to the present invention;
Figure 5 illustrates schematically operation of an exemplary method related to the field of the present invention;
Figure 6 illustrates schematically a number of concepts relating to operation of another method embodiment according to the present invention; and
Figure 7 illustrates schematically a number of concepts relating to operation of another method embodiment according to the present invention.

### Description of embodiments

Some applications can assume enough constraints about the environment or the way it is captured, such that modeling it is feasible. This is called Structure-from-Motion or SfM, which is a well-researched domain in computer vision. Nevertheless, some unsolved problems remain: good solutions exist under restricted assumptions, but there is no one-size-fits-all solution yet. As soon as the geometry of the scene is known, it can be navigated through freely. However, it the geometry of the scene is not known (sufficiently), it is in general not possible to navigate freely through that scene.

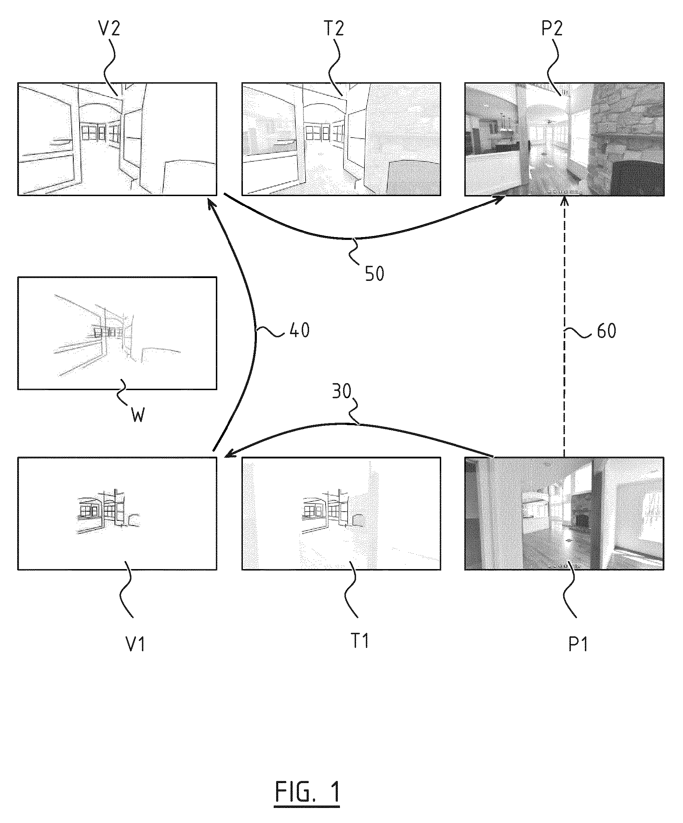

Figure 1 illustrates schematically operation of a method embodiment according to the present invention. The method embodiment displays a transition 60 from a first photographic image P1 viewed from a first camera position, to a second photographic image P2 viewed from a second camera position different from the first camera position. The transition 60 is shown as a dotted line, because it is not displayed as such directly, but via the combination track 30, 40, 50. The figure shows relatively more virtual representations on the left and relatively more realistic representations on the right, and shows changing camera positions from top to bottom.

In a particular embodiment, the method comprises: displaying the first photographic image P1; displaying one virtual image W of a transformation operation 40 from a first virtual image V1 corresponding to the first photographic image P1 to a second virtual image V2 corresponding to the second photographic image P2; and displaying the second photographic image P2, in order to display the transition 60. By showing the first P1 and second P2 photographic images, and by showing the one virtual image W in-between, the method embodiment allows the user to perceive the navigation (that is, the change in camera position) from the camera position of the first photographic image P1 to the camera position of the second photographic image P2, in an appealing virtual representation, thus less subject to distorting artefacts.

In another particular embodiment, the method comprises: displaying the first photographic image P1; displaying the first virtual image V1; displaying one or more virtual images W of the transformation operation 40; displaying the second virtual image V2; and displaying the second photographic image P2. By displaying one or both of the first V1 and second V2 virtual images, the transition 60 can be displayed more gradually, and by more than one virtual image W of the transformation operation 40, the transition 60 can further be displayed more gradually. The more gradual transition 60 is displayed, the easier it is for the user to keep track of the navigation path from the first camera position to the second camera position.

Transformation operation 30 may comprise reducing the number of visual features of the first photographic image P1 in order to transform the first photographic image P1 into the first virtual image V1. Transformation operation 50 may comprise enriching the number of visual features of the second virtual image V2 in order to arrive at the second photographic image P2 - or expressed *vice versa*, transformation operation 50 may comprise reducing the number of visual features of the second photographic image P2 in order to transform the second photographic image P2 into the second virtual image V2.

One or more virtual images of transformation operations 30 and/or 50 may preferably be displayed to the user, for example as first transformation image T1 and/or second transformation image T2, respectively. Example techniques for transformation operations 30 and/or 50 may comprise cross-fading, as is shown here - that is, fading one image out while fading the other image in - in order to maintain visual overlap between the respective photographic image P1 or P2 and the respective corresponding virtual image, or may comprise one or more other suitable transformation visualizations. The corresponding virtual image V1 or V2 may have a fully corresponding camera position to its respective corresponding photographic image P1 or P2, or may have a camera position that deviates therefrom.

Preferably, at least some of the objects comprised in the scene(s) depicted by the first P1 and second P2 photographic images are reduced to video feature representations such as object line segments. It will be understood that such object line segments do not reflect a true wireframe representation of the depicted scene(s), as doing so would require more knowledge of the geometrical structure of the depicted scene(s). In exemplary embodiments, starting and ending points of the object line segments are matched using a matching algorithm, and collinear object line segments are joined - in a preferred embodiment, the matching and joining, as well as handling of occlusions, may be accomplished with a non-zero margin for error, because this preferred method embodiment may advantageously aim to display a transition (i.e. visualize a change) rather than derive a true geometrical structure.

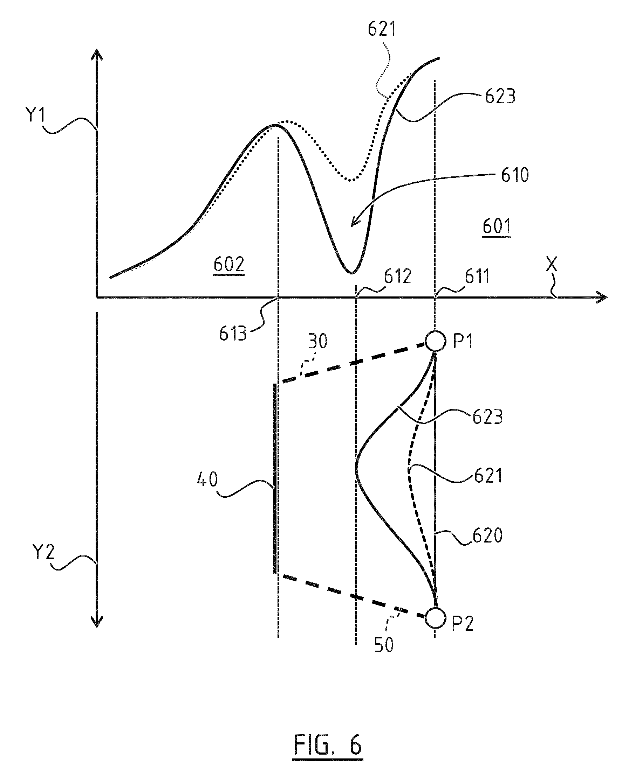

In other words, whereas previously used techniques for allowing a computer to do Structure-from-Motion pose significant requirements (for example fine calibration, point cloud-to-mesh generation, occlusion modelling, texture blending, and the like), which operate on stringent assumptions and require a lot of computational resources and typically even require manual interaction, the present method embodiment may aim to address at least some of these shortcomings. Moreover, since assumptions and algorithms may fail, such previously used techniques may suffer from the "uncanny valley" problem, which will be further discussed below with reference to Figure 6, whereas an insight of the inventors is to not try to "bridge the uncanny valley", but to leave the interpretation of the displayed transition to the user's visual perception.

It is noted that, in the absence of a 3D structure model, the transformation of 2D features is still possible, though not trivial, because camera projection is not a linear function. Camera projection is only linear in homogeneous coordinates, and not in the final rendering coordinates. However, there is only one type of ambiguity: for a given depth plane, zooming in and moving closer to that plane may yield the same effect. This ambiguity cannot readily be solved in 2D. However, it is an insight of the inventors that a linear approximation in 2D is good enough to model the linear path in 3D, as it has surprisingly been found that the error introduced by this linearization is less disturbing, when interpreting geometric structure of the depicted scene(s) is left to the user's perception, than if the user is provided with a deformed mesh structure.

It will be understood that photographic images used as the first photographic image P1 and/or the second photographic image P2 may originate from a calibrated 360° camera, but may just as well originate from a simple 2D point-and-shoot camera, or may just as well be re-purposed existing old photographic images.

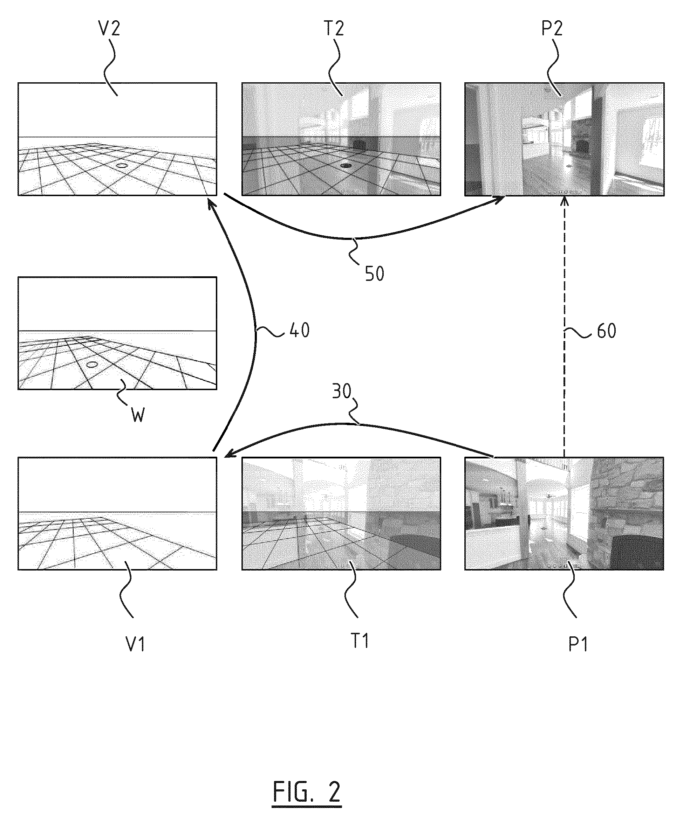

Figure 2 illustrates schematically operation of another method embodiment according to the present invention. Operations of this other method embodiment are analogous to analogously referenced operations of the method embodiment illustrated in Figure 1, and are therefore not explained in detail. However, a difference between this other method embodiment and the method embodiment illustrated in Figure 1 is that the former uses virtual images V1, W, V2 (and in part first transformation image T1 and second transformation image T2) of a virtual image type showing one or more virtual reference planes, whereas the latter uses object line segments (as discussed above). The virtual reference planes may preferably be virtual representations of a ground or floor plane of the depicted scene ("world axes"), and/or other planes that can provide easy spatial reference, such as side planes (optionally in perspective), or the like. The planes may optionally be gridded. This other embodiment may include the use of reference points, preferably near or at the surface of one or more of the virtual reference planes, to provide guidance for the user's sense of navigation during the displaying of the transition. This other embodiment advantageously may be performed without requiring *a priori* knowledge of the depicted scene(s) and/or without requiring assumptions concerning the geometry of the depicted scene(s). If some knowledge or insight regarding the depicted scene(s) is available, for example walls, an aligned floorplan or street-level plan, or some other registered geometrical information, this knowledge or insight may preferably be incorporated in displaying the one or more virtual reference planes.

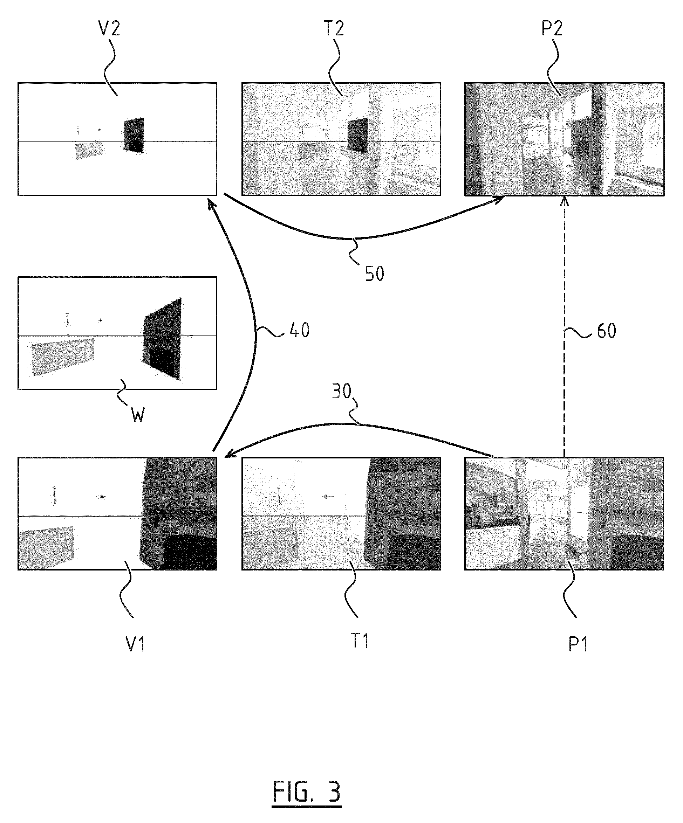

Figure 3 illustrates schematically operation of another method embodiment according to the present invention. Operations of this other method embodiment are analogous to analogously referenced operations of the method embodiment illustrated in Figure 1, and are therefore not explained in detail. However, a difference between this other method embodiment and the method embodiment illustrated in Figure 1 is that the former uses virtual images V1, W, V2 (and in part first transformation image T1 and second transformation image T2) of a virtual image type showing one or more reference objects, whereas the latter uses object line segments (as discussed above). The reference objects may for example be (virtual or preferably photographic) representations of photographic objects comprised within the depicted scene, preferably objects which are depicted both in the first photographic image P1 and in the second photographic image P2, as these may provide guidance for the user's sense of navigation during the displaying of the transition. The one or more reference objects may preferably be objects that overlap at least partially, preferably substantially in the first P1 and second P2 photographic images. In a preferred embodiment, candidates for the one or more reference objects may for example be (nearly) planar objects, such as tables, wall paintings, façades, or the like, because the deformation of such (nearly) planar objects due to the lack of Structure-from-Motion (in other words, due to the lack of insight in the geometrical nature of the depicted scene) is likely small, allowing the use of a simple, gradual homography. In another preferred embodiment, additional or alternative candidates for the one or more reference objects may for example be objects whose geometrical interrelationship is more important (for understanding the geometry of the depicted scene) than their individual appearances - for example two vases on a table, or the like. Such objects may have similar individual appearances in both the first P1 and second P2 photographic images, but their respective position may indicate the way in which the camera position (i.e. the viewpoint of the scene) changes. In a specifically preferred embodiment, such candidate objects are preferably visually unique or at least easy to visually match automatically - for example, a single window of a building façade with ten similar windows may be a less preferable candidate object, whereas a single specific tree standing forlorn in a landscape devoid of other trees may be a more preferable candidate objects.

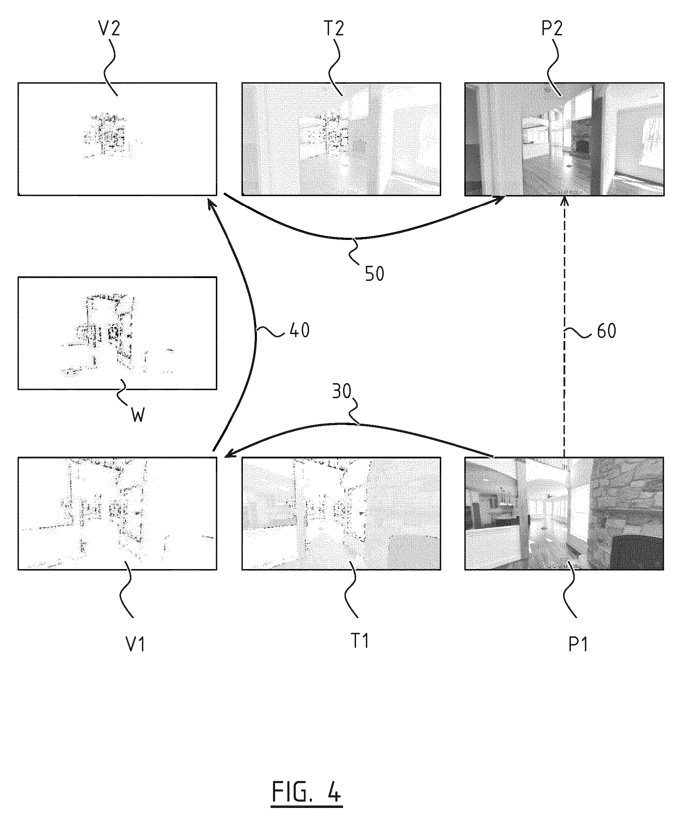

Figure 4 illustrates schematically operation of another method embodiment according to the present invention. Operations of this other method embodiment are analogous to analogously referenced operations of the method embodiment illustrated in Figure 1, and are therefore not explained in detail. However, a difference between this other method embodiment and the method embodiment illustrated in Figure 1 is that the former uses virtual images V1, W, V2 (and in part first transformation image T1 and second transformation image T2) of a virtual image type showing a point cloud, which is a set of data points in a coordinate system of the depicted scene (for example a 3D coordinate system) - where the data points may for example correspond with surface points or with significant edge point of objects depicted in the scenes of both the first P1 and second P2 photographic images, thus "point matches" - whereas the latter uses object line segments (as discussed above). In a preferred embodiment, the data points of the point cloud may be visually displayed as points in a space, but in other embodiments, the data points may be post-processed (for example by clustering or connecting or colouring at least some, preferably all of them). In various embodiments, video features may be defined using well-known implementations such as SIFT (Scale-invariant feature transform), SURF (Speeded Up Robust Features), Harris, or the like - then, features may be defined *inter alia* in terms of edge and corner points, such that the point cloud naturally represents edge and corner structure of the depicted scene. Moreover, advantageously, the point cloud may be resilient to outliers, in the sense that the user's perception may readily cope with outlier data points (for example resulting from false matches).

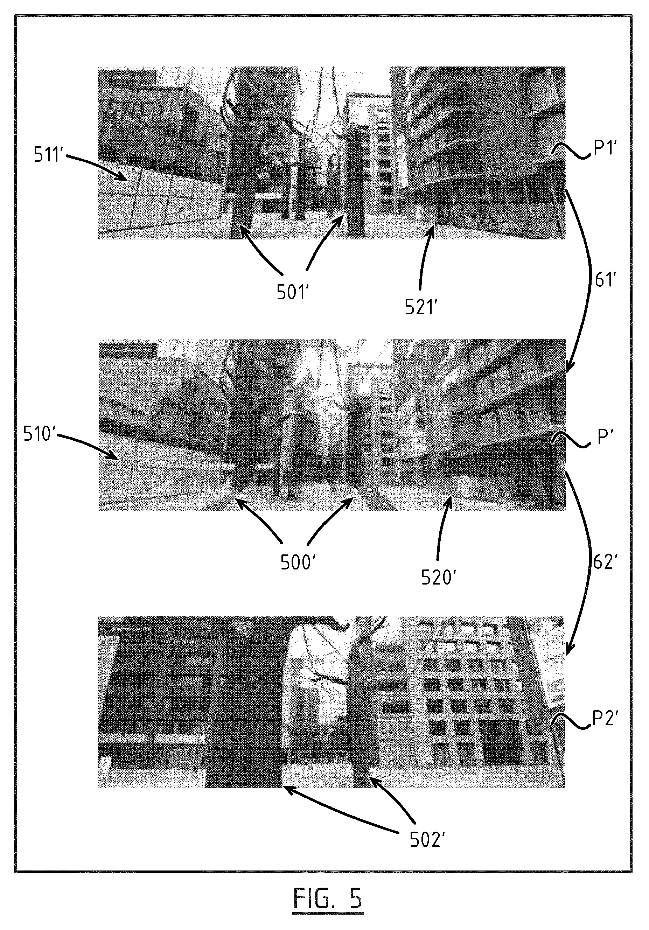

Figure 5 illustrates schematically operation of an exemplary method related to the field of the present invention. The figure shows how a transition 61', 62' is displayed from a first photographic image P1' to a second photographic image P2', both viewed from different camera positions (the second photographic image P2' is viewed more closely to the objects in the depicted scene). The transition 61', 62' transforms the first photographic image P1' to the second photographic image P2', via an intermediate photographic image P', which is displayed as part of a morphing operation from the first P1' to the second P2' photographic image. The transition is accomplished by using Structure-from-Motion, as discussed above. However, it can be seen from the figure that a number of constraint assumptions are invalid for the depicted scene. For example, the scene depicts *inter alia* the following objects (referenced in the first photographic image PI'): a sculpture comprising elongated tree-like trunks 501' and 502', and two building façades 511', 521' which border the floor plane of the depicted square and which are shown in an oblique perspective. During the displaying of the transition 61', 62', the listed objects are shown deformed: façades 510' and 520' shown in the intermediate photographic image P' include an upper portion that is still shown flat and straight, but also include a lower portion that has wrongly been considered to be part of the floor plane of the square and which has therefore been skewed in a visually displeasing manner. Likewise, the trunks 500' are shown during the displaying of the transition 61', 62' with an upper portion that is straight and upright, but also with a lower portion that has wrongly been considered to be part of the floor plane of the square too and which has therefore also been skewed in a visually displeasing manner. It is clear from Figure 5 that certain methods using Structure-from-Motion may operate under incorrect assumptions and constraints, and may therefore display visually displeasing artefacts, like the skewed lower portion of trunk 500' or the skewed lower portions of building façades 510' and 520'.

Figure 6 illustrates schematically a number of concepts relating to operation of another method embodiment according to the present invention. The figure has a top half sharing a horizontal axis X (indicating the level of realism increasing from left to right) with a bottom half. The top half has an upward vertical axis Y1, which indicates a subjective measure of appeal as experienced by a user perceiving what is being displayed, increasing from bottom to top of the figure. The top half has a downward vertical axis Y2, which indicates time, increasing from top to bottom of the figure.

The top half illustrates on the left side a more virtual region 602 of levels of realism (meaning that images are virtual representations of the user's visual reality - that is, are generally lower on axis Y1), and on the right side a more real region 601 of levels of realism (meaning that images are either photographic or photorealistic, and thus correspond exactly or very closely to the user's visual reality - that is, are generally higher on axis Y1). The top half further illustrates the "uncanny valley" 610, which is a region of levels 612 of realism falling between sufficiently real levels 611 of realism (in region 601) and clearly virtual levels 613 of realism (in region 602). A problem of the uncanny valley 610 is that images (or other perceivable media) therein are not quire real enough, but are not evidently virtual either, and are therefore discordant for the user's perception - they are an uncanny and unappealing approximation of the user's visual reality, scoring lower on axis Y1.

The bottom half illustrates a transition from a first photographic image P1 to a second photographic image P2, viewed from different camera positions, over some course of time over axis Y2. In an ideal (and impractical) situation, this transition would be a photorealistic transition 620, at a sufficiently real level 611 of realism. However, in practical situations, this transition cannot be photorealistic, and has to use an at least partially virtual representation (for example tracks 621 and 623, or the combination track 30, 40, 50). Track 621 represents a Structure-from-Motion solution for an application that allows only minor pose changes (that is, changes in camera position) - in other words, complies with strict assumptions - where these assumptions are met. This is shown in the bottom half of the figure in the sense that track 621 does not deviate significantly from the ideal photorealistic transition 620, and in the top half of the figure in the sense that track 621 dips relatively shallowly into the uncanny valley 610. Track 623, however, represents another Structure-from-Motion solution for an application that allows only minor pose changes, wherein the strict assumptions are *not* met. This is shown in the bottom half of the figure in the sense that track 623 does deviate significantly from the ideal photorealistic transition 620 (to a level 612 of realism in the uncanny valley 610), and in the top half of the figure in the sense that track 623 dips significantly deeply into the uncanny valley 610. Therefore, approaches based on Structure-from-Motion may be of limited use.

The bottom half further illustrates a combination track 30, 40, 50, comprising: a transformation operation 30 of the first photographic image P1 to a first virtual image, corresponding to the first photographic image P1, at level 613 of realism (that is, in the clearly virtual region 602); a transformation operation 40 from the first virtual image to a second virtual image, corresponding to the second photographic image P2, in this example embodiment also at level 613 of realism (but in other example embodiments the second virtual image may be of a different level of realism than the first virtual image - that is, the track segment showing transformation operation 40 may be skewed with respect to axis X); and a transformation operation 50 from the second virtual image to the second photographic image P2. Transformation operation 30 may comprise reducing the number of visual features of the first photographic image P1 in order to generate the first virtual image. Transformation operation 50 may comprise enriching the number of visual features of the second virtual image in order to arrive at the second photographic image P2. One or more virtual images of transformation operations 30 and/or 50 may preferably be displayed to the user, for example as the first transformation image T1 and/or the second transformation image T2, respectively, as shown in Figures 1-4. Example techniques for transformation operations 30 and/or 50 may comprise cross-fading - that is, fading one image out while fading the other image in - in order to maintain visual overlap between the respective photographic image P1 or P2 and the respective corresponding virtual image. The corresponding virtual image may have a fully corresponding camera position to its respective corresponding photographic image, or may have a camera position that deviates therefrom.

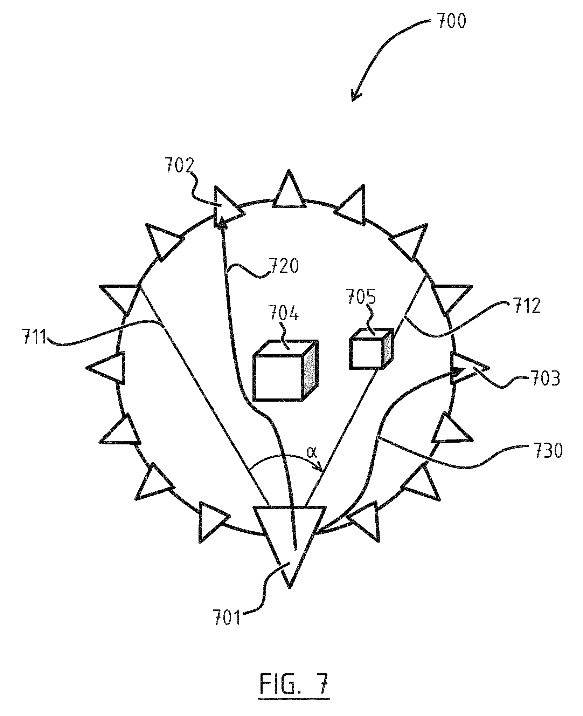

Figure 7 illustrates schematically a number of concepts relating to operation of another method embodiment according to the present invention. In this other method embodiment, the displaying of the at least one virtual image of the transformation operation 40 comprises excluding at least partially visualization of at least one virtual object 704, if the second camera position 702 is comprised within a predetermined cone 711-712 from the first camera position 701, wherein the predetermined cone 711-712 is defined based on the at least one virtual object - and, preferably, wherein the predetermined cone 711-712 is centred on the at least one virtual object. It will be understood that the predetermined cone 711-712 represents a cone of places to spatially transition to - in particular, places where transitioning into, while displaying a corresponding transformation of a virtual object upon which the predetermined cone is based, would appear in a visually disturbing manner, as is further explained below - and may also be termed a pyramid or a polyhedron or another appropriately shaped body. The figure shows a schematic representation of a number of camera positions (indicated as inward-directed triangles along the circumference of a circle 700), in particular a first camera position 701, a second camera position 702 and a third camera position 703. From the first camera position 701, there is a predetermined cone 711-712, having as its top the first camera position 701, and being delineated by a line 711 on the left side and by a line 712 on the right side, separated by an angle α of for example 60°, but which may also be less than 60° or more than 60°, depending on the chosen configuration, in particular depending on (for example proportional to) the shape and/or geometry of the first virtual object 704, based on which the predetermined cone 711-712 may be defined. The second camera position 702 lies within the cone 711-712, because the first virtual object 704 happens to be situated so, whereas the third camera position 703 does not lie within the cone 711-712. It is noted that the predetermined cone 711-712 does not (necessarily) correspond to whatever visual angle or field of view the (real or virtual) camera at the first camera position 701 has - the predetermined cone 711-712 is based on the location of the first virtual object 704, from the first camera position 701, for example by being centred on or adjacent to the first virtual object 704. The figure further shows a first navigation path 720 from the first camera position 701 to the second camera position 702, and a second navigation path 730 from the first camera position 701 to the third camera position 703. The navigation paths 720 and 730 conceptually represent virtual transformations, in at least the sense that they correspond to transitions from the first camera position 701 to the second camera position 702 and the third camera position 703 respectively, insofar as these are represented in a virtual space. The figure further shows that a first virtual object 704 is comprised (fully) within the cone 711-712 (preferably, it or its centroid lies at the centre of angle α). The first virtual object 704 is an overlapping part of the scene depicted in a first photographic image P1 viewed from the first camera position 701 and a second photographic image P2 viewed from the second camera position 702. It is an insight of the inventors that a navigation path (that is, a representation of a virtual transformation) should not pass through or very closely near an overlapping part of the scene depicted in the first P1 and second P2 photographic images (in this example, navigation path 720 would pass to closely). Experiments can show that the linearization effect may create visually disturbing deformations, in particular if the second camera position 702 is comprised within the cone 711-712, which may be defined based on (preferably centred on) such an object, from the first camera position 701. Therefore, it is a further insight of the inventors to not visualize at least part of the overlapping part (in other words, to exclude at least partially visualization of the first virtual object 704). Moreover, it is a further insight of the inventors that a further-away virtual object, such as the second virtual object 705, may nevertheless be fully visualized. Furthermore, the second navigation path 730 from the first camera position 701 to the third camera position 703 might pass too closely to the second virtual object 705.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The program storage devices may be resident program storage devices or may be removable program storage devices, such as smart cards. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks labelled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer.

It should be noted that the above-mentioned embodiments illustrate rather than limit the invention and that those skilled in the art will be able to design alternative embodiments without departing from the scope of the appended claims. In the claims, any reference signs placed between parentheses shall not be construed as limiting the claim. The word "comprising" does not exclude the presence of elements or steps not listed in a claim. The word "a" or "an" preceding an element does not exclude the presence of a plurality of such elements. The invention can be implemented by means of hardware comprising several distinct elements and by means of a suitably programmed computer. In claims enumerating several means, several of these means can be embodied by one and the same item of hardware. The usage of the words "first", "second", "third", etc. does not indicate any ordering. These words are to be interpreted as names used for convenience.

Whilst the principles of the invention have been set out above in connection with specific embodiments, it is to be understood that this description is merely made by way of example and not as a limitation of the scope of protection which is determined by the appended claims.

## Claims

1. A method for displaying a transition (60), from a first photographic image (P1) viewed from a first camera position, to a second photographic image (P2) viewed from a second camera position different from the first camera position; the method comprising:
- displaying the first photographic image (P1);
- displaying at least one virtual image (W, V1, V2, T1, T2) of a transformation operation (40) from a first virtual image (V1) corresponding to the first photographic image (P1), to a second virtual image (V2) corresponding to the second photographic image (P2); and
- displaying the second photographic image (P2).

2. The method of claim 1, wherein the displaying of the at least one virtual image of the transformation operation (40) comprises displaying at least three virtual images (V1, W, V2), wherein the at least three virtual images comprise at least the first virtual image (V1), the second virtual image (V2), and one or more virtual images (W) of the transformation operation (40) which are intermediate between the first virtual image (V1) and the second virtual image (V2).

3. The method of any one of the previous claims, comprising:
- extracting a first number of image features from the first photographic image (P1);
- extracting a second number of image features from the second photographic image (P2); and
- matching the extracted first number of image features and the extracted second number of image features in order to determine shared image features that are shared by the first photographic image (P1) and the second photographic image (P2); and
wherein the transformation operation (40) is performed based on the determined shared image features.

4. The method of any one of the previous claims, comprising:
- reducing the number of visual features of the first photographic image (P1) in order to transform the first photographic image (P1) into the first virtual image (V1); and
- reducing the number of visual features of the second photographic image (P2) in order to transform the second photographic image (P2) into the second virtual image (V2).

5. The method of any one of the previous claims, wherein the displaying of the at least one virtual image of the transformation operation (40) comprises excluding at least partially visualization of at least one virtual object (704), if the second camera position (702) is comprised within a predetermined cone (711-712) from the first camera position (701), wherein the predetermined cone (711-712) is defined based on, preferably is centred on, the at least one virtual object (704).

6. The method of any one of the previous claims, wherein the at least one virtual image (W, V1, V2, T1, T2) comprises at least one of the following image types: an image showing one or more virtual reference planes; an image showing one or more reference objects; an image showing a point cloud; and an image showing object line segments.

7. The method of any one of the previous claims, comprising:
- displaying at least one first transformation image (T1) of a transformation operation (30) from the first photographic image (P1) to the first virtual image (V1); and
- displaying at least one second transformation image (T2) of a transformation operation (50) from the second virtual image (V2) to the second photographic image (P2).

8. A computer program product, comprising computer-executable instructions configured for, when executed, controlling the steps of any one of the methods of any one of the claims 1-7.

9. An apparatus for displaying a transition (60), from a first photographic image (P1) viewed from a first camera position, to a second photographic image (P2) viewed from a second camera position different from the first camera position; the apparatus comprising a display controller configured for:
- displaying the first photographic image (P1); and
- displaying at least one virtual image (W, V1, V2, T1, T2) of a transformation operation (40) from a first virtual image (V1) corresponding to the first photographic image (P1), to a second virtual image (V2) corresponding to the second photographic image (P2); and
- displaying the second photographic image (P2).

10. The apparatus of claim 9, wherein the display controller is further configured for the displaying of the at least one virtual image of the transformation operation (40): displaying at least three virtual images (V1, W, V2), wherein the at least three virtual images comprise at least the first virtual image (V1), the second virtual image (V2), and one or more virtual images (W) of the transformation operation (40) which are intermediate between the first virtual image (V1) and the second virtual image (V2).

11. The apparatus of any one of the previous claims, comprising a feature matching module configured for:
- extracting a first number of image features from the first photographic image (P1);
- extracting a second number of image features from the second photographic image (P2); and
- matching the extracted first number of image features and the extracted second number of image features in order to determine shared image features that are shared by the first photographic image (P1) and the second photographic image (P2); and
wherein the display controller is configured for performing the transformation operation (40) based on the determined shared image features.

12. The apparatus of any one of the previous claims, wherein the display controller is configured for reducing the number of visual features of the first photographic image (P1) in order to transform the first photographic image (P1) into the first virtual image (V1); and configured for reducing the number of visual features of the second photographic image (P2) in order to transform the second photographic image (P2) into the second virtual image (V2).

13. The apparatus of any one of the previous claims, wherein the display controller is configured for the displaying of the at least one virtual image of the transformation operation (40) by excluding at least partially visualization of at least one virtual object (704), if the second camera position (702) is comprised within a predetermined cone (711-712) from the first camera position (701), wherein the predetermined cone (711-712) is defined based on, preferably is centred on, the at least one virtual object (704).

14. The apparatus of any one of the previous claims, wherein the at least one virtual image (W, V1, V2, T1, T2) comprises at least one of the following image types: an image showing one or more virtual reference planes; an image showing one or more reference objects; an image showing a point cloud; and an image showing object line segments.

15. The apparatus of any one of the previous claims, wherein the display controller is further configured for:
- displaying at least one first transformation image (T1) of a transformation operation (30) from the first photographic image (P1) to the first virtual image (V1); and
- displaying at least one second transformation image (T2) of a transformation operation (50) from the second virtual image (V2) to the second photographic image (P2).
